# FASCICULE DE BREVET EUROPEEN

(11) **EP 3 596 765 B1**
(45) Date de publication et mention de la délivrance du brevet: **28.04.2021**
(21) Numéro de dépôt: 18710510.1
(22) Date de dépôt: 19.02.2018
(51) Int. Cl.: H01M 4/13, H01M 4/70, H01M 10/04, H01M 10/052, H01M 10/0525, H01M 10/054, H01M 10/0585, H01M 6/16, H01M 6/40

(54) **ACCUMULATEUR DÉFORMABLE**
VERFORMBARER AKKUMULATOR
DEFORMABLE ACCUMULATOR

(30) Priorité: 15.03.2017 FR 1752113
(43) Date de publication de la demande: 22.01.2020
(73) Titulaire: Institut Mines Telecom, 75014 Paris (FR)
(72) Inventeur: DJENIZIAN, Thierry, 13390 Auriol (FR); DELATTRE, Roger, 13180 GIGNAC-LA-NERTHE (FR)
(74) Mandataire: Verriest, Philippe
(86) Numéro de dépôt international: PCT/FR2018/050385
(87) Numéro de publication internationale: WO 2018/167393

(56) Documents cités:
- SHENG XU ET AL: "Stretchable batteries with self-similar serpentine interconnects and integrated wireless recharging systems", NATURE COMMUNICATIONS, vol. 4, 26 février 2013 (2013-02-26), pages 1-8, XP055227670, DOI: 10.1038/ncomms2553 & S. Xu: "Stretchable batteries with self-similar serpentine interconnects and integrated wireless recharging systems. - Supplementary information", Nat. Commun., 26 février 2013 (2013-02-26), XP055388633, Extrait de l'Internet: URL:http://www.nature.com/article-assets/n pg/ncomms/journal/v4/n2/extref/ncomms2553- s1.pdf [extrait le 2017-07-06]
- PANDEY GAIND P ET AL: "Toward highly stable solid-state unconventional thin-film battery-supercapacitor hybrid devices: Interfacing vertical core-shell array electrodes with a gel polymer electrolyte", JOURNAL OF POWER SOURCES, ELSEVIER SA, CH, vol. 342, 12 janvier 2017 (2017-01-12), pages 1006-1016, XP029895666, ISSN: 0378-7753, DOI: 10.1016/J.JPOWSOUR.2017.01.022
- MIN KOO ET AL: "Bendable Inorganic Thin-Film Battery for Fully Flexible Electronic Systems", NANO LETTERS, vol. 12, no. 9, 12 septembre 2012 (2012-09-12), pages 4810-4816, XP055388323, US ISSN: 1530-6984, DOI: 10.1021/nl302254v
- JAE-YONG CHOI ET AL: "Silicon Nanofibrils on a Flexible Current Collector for Bendable Lithium-Ion Battery Anodes", ADVANCED FUNCTIONAL MATERIALS, WILEY - V C H VERLAG GMBH & CO. KGAA, DE, vol. 23, no. 17, 6 mai 2013 (2013-05-06), pages 2108-2114, XP001582874, ISSN: 1616-301X, DOI: 10.1002/ADFM.201202458 [extrait le 2012-12-03]

## Description

La présente invention concerne le domaine de l'électronique étirable, et plus particulièrement celui des éléments de stockage d'énergie électrique, ou accumulateurs, déformables.

De nombreuses recherches visent à mettre au point des capacités électriques ou des batteries déformables.

Il est notamment connu de déposer sur des substrats étirables des réseaux d'îlots millimétriques d'électrodes actives se présentant sous forme de couches minces reliées entre elles par des serpentins utilisés comme collecteurs de courants étirables. Cette configuration permet des étirements de 300% mais présente l'inconvénient de mobiliser une partie importante de la surface pour les interconnexions en serpentins. Ainsi moins de 30 % de la surface totale est occupé par les matériaux actifs des batteries.

Il est connu également de déposer les contacts métalliques sur un matériau actif pré-étiré, générant ainsi, une configuration en « vaguelettes » lorsque le substrat pré-étiré a repris sa forme initiale. La limite de ce procédé est liée au taux initial de pré-étirage, généralement assez faible.

Il est enfin également connu de tisser des fibres ayant des propriétés de stockage d'énergie électrique ; l'extensibilité est alors naturellement assurée par le tissage. L'inconvénient de ce procédé est qu'il oblige à loger toute l'électrochimie multicouche d'une batterie Li-ion au sein du volume très limité d'une fibre.

Dans un article de SHENG XU et AL, intitulé « Stretchable batteries with self-similar serpentine interconnects and integrated wireless recharging systems », les auteurs décrivent un procédé de fabrication d'un accumulateur étirable, basés sur l'utilisation de tampons, ou de coussinets ayant la forme de galettes beaucoup plus larges que hautes, qui limitent la densité d'énergie et de puissance disponible par unité de surface, sans diminuer suffisamment la résistance électrique entre les électrodes et les collecteurs de courants.

Dans un article de PANDEY GAIND P ET AL, intitulé « Toward highly stable solid-state unconventional thin-film battery-supercapacitor hybrid devices : interfacing vertical core-shell array electrodes with a gel polymer electrolyte », les auteurs décrivent l'utilisation d'un électrolyte en gel polymer, sans viser un taux significatif d'étirabilité.

L'invention a pour but de proposer un dispositif de stockage électrochimique de l'énergie de type accumulateurs permettant d'améliorer les résultats obtenus à ce jour en termes de performances électrochimiques (haute densité d'énergie et de puissance par unité de surface) lorsque le dispositif est sollicité par des contraintes mécaniques cycliques à long terme.

A cet effet, la présente invention concerne un accumulateur déformable comprenant :
a. un premier et un deuxième substrats plans déformables,
b. au moins un premier collecteur étirable de courant déposé sur au moins une partie d'une face du premier substrat, à proximité et le long d'une au moins première portion de ligne courbe dont la longueur est supérieure à la distance entre ses deux extrémités,
c. au moins un deuxième collecteur étirable de courant déposé sur au moins une partie d'une face du deuxième substrat, à proximité et de chaque côté d'une au moins deuxième ligne courbe dont la longueur est supérieure à la distance entre ses deux extrémités,
d. une anode constituée d'un premier ensemble de piliers, déposés sur le au moins un premier collecteur de courant, les piliers du premier ensemble étant espacés les uns des autres sur une surface du premier collecteur, les piliers du premier ensemble de piliers ayant une hauteur comprise entre 1 µm et 1000 µm, et une largeur comprise entre 1 µm et 100 µm,
e. une cathode constituée d'un deuxième ensemble de piliers, déposés sur le au moins un deuxième collecteur de courant, les piliers du deuxième ensemble étant espacés les uns des autres sur une surface du deuxième collecteur, les piliers du deuxième ensemble de piliers ayant une hauteur comprise entre 1 µm et 1000 µm, et une largeur comprise entre 1 µm et 100 µm,
f. un électrolyte permettant le transfert des espèces ioniques, les faces du premier et du deuxième substrat, sur lesquelles sont déposés respectivement le au moins un premier et le au moins un deuxième collecteur de courant, étant placées en vis-à-vis et délimitant un volume occupé par l'électrolyte dans lequel les piliers de l'anode et de la cathode sont immergés.

Selon un aspect de l'invention, l'électrolyte est un polymère auto-réparant.

Selon un aspect de l'invention, la hauteur d'un premier pilier du premier ensemble étant inférieure à une première hauteur, et la hauteur des deuxièmes piliers du deuxième ensemble qui sont en vis-à-vis de ce premier pilier étant inférieure à une deuxième hauteur, la distance qui sépare les faces du premier et du deuxième substrat en vis-à-vis autour du premier pilier est supérieure à la somme de la première hauteur et de la deuxième hauteur.

Selon un aspect de l'invention, la largeur des collecteurs de courant est comprise entre 100 µm et 400 µm.

Selon un aspect de l'invention, les piliers sont espacés d'une distance comprise entre 0.1 µm et 20 µm.

Selon un aspect de l'invention, les piliers sont espacés d'une distance comprise entre 2 µm et 10 µm.

Selon un aspect de l'invention, les piliers présentent une hauteur comprise entre 10 µm et 100 µm.

Selon un aspect de l'invention, les piliers présentent une largeur comprise entre 2 µm et 10 µm.

L'invention porte également sur un procédé de fabrication d'un accumulateur selon l'une des revendications précédentes, comprenant les étapes suivantes :
a. Préparer un premier et un deuxième substrat ;
b. Déposer au moins un premier collecteur étirable de courant sur au moins une partie d'une face du premier substrat, à proximité et le long d'une au moins première portion de ligne courbe dont la longueur est supérieure à la distance entre ses deux extrémités,
c. Déposer au moins un deuxième collecteur étirable de courant sur au moins une partie d'une face du deuxième substrat, à proximité et de chaque côté d'une au moins deuxième ligne courbe dont la longueur est supérieure à la distance entre ses deux extrémités,
d. Déposer une anode constituée d'un premier ensemble de piliers, sur le au moins un premier collecteur de courant, les piliers du premier ensemble étant espacés les uns des autres sur une surface du premier collecteur, les piliers du premier ensemble de piliers ayant une hauteur comprise entre 1 µm et 1000 µm, et une largeur comprise entre 1 µm et 100 µm,
e. Déposer une cathode constituée d'un deuxième ensemble de piliers, sur le au moins un deuxième collecteur de courant, les piliers du deuxième ensemble étant espacés les uns des autres sur une surface du deuxième collecteur, les piliers du premier ensemble de piliers ayant une hauteur comprise entre 1 µm et 1000 µm, et une largeur comprise entre 1 µm et 100 µm,
f. Déposer un électrolyte sur les faces du premier et du deuxième substrat sur lesquelles sont déposés respectivement le au moins un premier et le au moins un deuxième collecteur de courant en immergeant les piliers de l'anode et de la cathode dans l'électrolyte, puis placer ces faces en vis-à-vis
   ou
   placer en vis-à-vis les faces du premier et du deuxième substrat sur lesquelles sont déposés respectivement le au moins un premier et le au moins un deuxième collecteur de courant, puis déposer un électrolyte dans le volume délimité par ces faces en immergeant les piliers de l'anode et de la cathode dans l'électrolyte.

Pour sa bonne compréhension, l'invention est décrite en référence aux dessins ci-annexés représentant, à titre d'exemple non limitatif, une forme de réalisation d'un produit selon l'invention.
Figure 1 représente une vue schématique de dessus du substrat servant de support à l'une des deux électrodes de l'élément de stockage d'énergie électrique selon l'invention.
Figure 2 représente une vue schématique de dessus d'une portion de collecteur de courant déposé sur le substrat représenté à la figure 1.
Figure 3 représente une autre vue schématique et en perspective d'une portion de collecteur de courant déposé sur le substrat représenté à la figure 1.
Figure 4 représente une vue schématique en perspective de l'ensemble des composants de l'élément de stockage d'énergie électrique selon un mode de réalisation de l'invention.
Figure 5 représente une deuxième vue schématique en perspective et partiellement éclatée, de l'ensemble des composants de l'élément de stockage d'énergie électrique selon un mode de réalisation de l'invention.
Figures 6a, 6b, 6c représentent trois exemples de maillages de serpentins présentant une périodicité bidirectionnelle dans le plan du substrat.
Figures 7a, 7b, 7c, 7d présentent de manière schématique les produits intermédiaires d'un procédé de fabrication selon l'invention.

Il est connu qu'un accumulateur se compose des éléments suivants :
- Un premier collecteur de courant en contact avec une électrode négative, dite anode, qui libère des électrons dans le circuit lors de la décharge.
- Un deuxième collecteur de courant en contact avec une électrode positive, dite cathode, qui capte les électrons en provenance du circuit lors de la décharge.
- Un séparateur imprégné d'un électrolyte permettant d'éviter les courts-circuits tout en assurant le transport des ions issus des différentes réactions électrochimiques se produisant au niveau des électrodes.
- Les transferts de charges (électrons et espèces ioniques) se font en sens inverse lorsque l'accumulateur est en charge.

Il est également connu que certains matériaux, de type polymère, dit auto-réparant, possède la propriété particulière de se régénérer spontanément en cas de fracture mécanique interne du matériau, par l'effet d'une réaction spontanée de polymérisation locale qui permet au matériau de se reconstituer à l'emplacement de la fracture.

L'accumulateur selon l'invention se caractérise d'une part par la forme allongée et repliée sur elle-même des collecteurs de courants, forme qui les fait ressembler à des serpentins, d'autre part par le fait que l'anode et la cathode sont structurées en un ensemble de rangées de micro-piliers dont la base repose sur son collecteur de courant respectif.

Selon un mode de réalisation de l'invention, chaque collecteur de courant est réalisé soit sur un substrat souple que l'on peut fléchir tel que le PET, un polyimide, le KAPTON, soit sur un substrat conformable que l'on peut étirer tel que le polydiméthylsiloxane (PDMS), ou le polyuréthane.

Le matériau du collecteur de courant peut être choisi parmi les différents matériaux conducteurs connus, par exemple un métal, tel que de l'or, du cuivre, du titane ou de l'aluminium.

Le procédé de dépôt du matériau peut être choisi parmi l'un des procédés connus, par exemple un procédé de dépôt de métal en phase vapeur, de lamination, ou bien des techniques plus récentes comme l'impression de matériaux conducteurs par sérigraphie/impression jet d'encre. La réalisation des motifs en serpentins peuvent être réalisés de manière additive par le dépôt de matière à travers un masque permettant de délimiter la zone de dépôt du collecteur de courant. Ils peuvent également être réalisés de manière soustractive par photolithographie ou encore par lithographie laser, lithographie par faisceau électronique ou ionique.

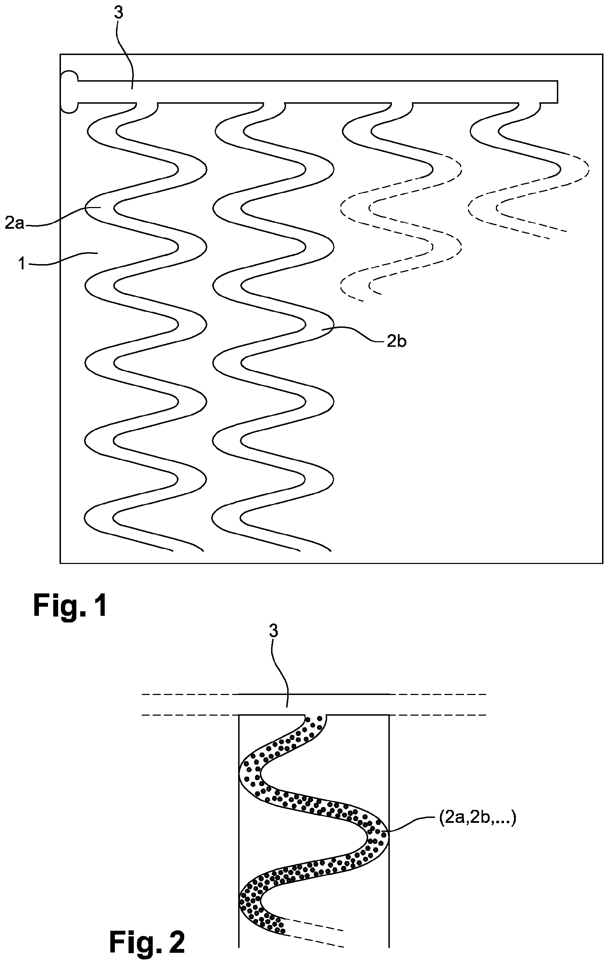

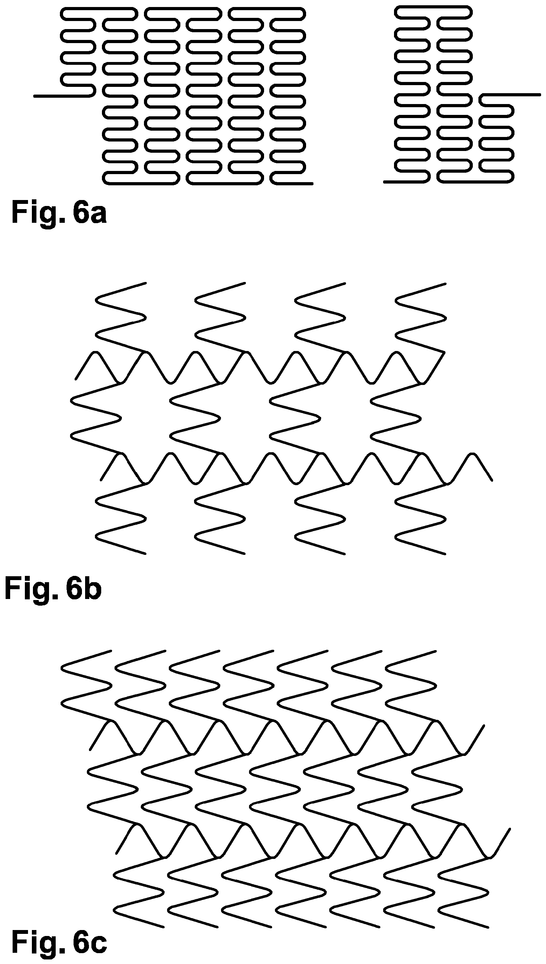

La figure 1 représente en vue de dessus d'un substrat 1 en forme de lame plane sur laquelle est déposé un collecteur de courant constitué de plusieurs serpentins 2a, 2b,... en contact avec une partie commune 3 constituant un pôle de l'élément de stockage de l'énergie électrique. La forme des serpentins, allongée et repliée sur elle-même, présente l'avantage de pouvoir être déformée et étirée de nombreuses fois sans que la continuité physique et électrique du collecteur de courant ne soit rompue. La largeur des lignes de ces serpentins est de l'ordre de la centaine de micromètres ou moins, de préférence comprise entre 100 µm et 400 µm. La forme précise des serpentins est déterminée de manière à maximiser la surface du collecteur de courant sans nuire à son extensibilité. Les serpentins peuvent présenter une périodicité d'ondulation dans une direction, ne supportant ainsi qu'une traction uni-axiale, ou bien dans deux directions afin de supporter une déformation bi-axiale du substrat. Des exemples de maillages de serpentins présentant une périodicité dans les deux directions sont présentés aux figures 6a, 6b, et 6c.

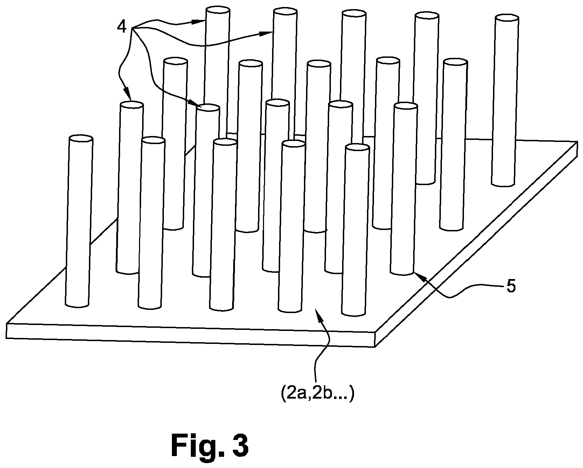

Selon un mode de réalisation de l'invention, chaque collecteur de courant est associé à une électrode déposée sur le collecteur de courant et structurée en un ensemble de micro-piliers 4, de forme sensiblement cylindrique, chaque pilier cylindrique ayant une de ses bases posée sur le serpentin, comme cela est représenté de manière schématique et en perspective sur la figure 3. Sur la figure 2 une vue schématique de dessus présente l'empreinte des micro-piliers formant une des électrodes sur un des collecteurs de courant en serpentin.

Le diamètre, ou la largeur, de la base des micro-piliers est de l'ordre de quelques microns, de préférence comprise entre 1 µm et 100 µm, plus avantageusement entre 2 µm et 10 µm.

La hauteur des micro-piliers est de l'ordre de quelques dizaines de microns, de préférence comprise entre 1 µm et 1000 µm, plus avantageusement entre 10 µm et 100 µm.

L'espacement entre les micro-piliers est de l'ordre de quelques microns, de préférence comprise entre 0.1 µm et 20 µm, plus avantageusement entre 2 µm et 10 µm.

Le matériau actif utilisé pour former l'anode peut être choisi parmi les matériaux actifs lithiés et/ou sodés connus pour la fonction d'anode tels que le lithium métallique; le sodium métallique ; le silicium ; le bismuth ; les intermétalliques tels que SnSb ; les nitrures lithiés tels que LiMyN₂ où M représente Fe, Co, Ni, Mn, ou Cu et y le coefficient stœchiométrique du métal ; les composés carbonés tels que le carbone, LiC₆ ou le le graphène ; les alliages d'étain tels que Sn ou SnM où M représente Fe, Co, Ni, Mn, ou Cu ; oxydes d'étain tels que SnO et SnO₂ ; les oxydes de métaux de transitions tels que TiO_{2;} et les oxydes lithiés comme le Li₄Ti₅O₁₂ (LTO).

Le matériau actif utilisé pour former la cathode peut être choisi parmi les matériaux actifs lithiés et/ou sodés connus pour la fonction de cathode tels que les oxydes de manganèse, notamment MnO₂, LiMn₂O₄, LiNi₀.5Mn₁.5O₄; le UCoO₂ ; le LiTiS₂ ; les oxydes de vanadium tels que V₂O₅, LiV₃O₈ ; les composés polyanioniques inorganiques comme les phosphates tels que LiMPO₄ où M représente Fe, Co, Ni, Mn ou Cu ; les fluorophosphates tels que LiFePO₄F ou tels que Li₂Co_{1-*x*}M*ₓ*PO₄F avec M représente Fe ou Mn, et x le coefficient stœchiométrique du métal ; ou les cuprophosphates tels que Cu₃(PO₄)₂.

Comme exemples préférés d'accumulateurs déformables selon la présente invention, on peut notamment citer les accumulateurs déformables dans lesquels :
- L'anode est constituée de lithium et la cathode de MnO_{2;}
- L'anode est constituée de lithium et la cathode de LiMn₂O_{4;}
- L'anode est constituée de lithium et la cathode de LiNi₀.5Mn₁.5O_{4;}
- L'anode est constituée de lithium et la cathode de UCoO₂ ;
- L'anode est constituée de lithium et la cathode de LiTiS_{2;}
- L'anode est constituée de lithium et la cathode de V₂O_{5;}
- L'anode est constituée de lithium et la cathode de LiV₃O_{8;}
- L'anode est constituée de lithium et la cathode de LiFePO_{4;}
- L'anode est constituée de lithium et la cathode de LiCoPO_{4;}
- L'anode est constituée de lithium et la cathode de LiNiPO_{4;}
- L'anode est constituée de lithium et la cathode de LiMnPO_{4;}
- L'anode est constituée de lithium et la cathode de LiCuPO_{4;}
- L'anode est constituée de lithium et la cathode de LiFePO₄F_{;}
- L'anode est constituée de lithium et la cathode de Cu₃(PO₄)_{2;}
- L'anode est constituée de lithium et la cathode de Li₂Co_{1-*x*}Fe*ₓ*PO₄F_{;}
- L'anode est constituée de lithium et la cathode de Li₂Co_{1-*x*}FeMn*ₓ*PO₄F_{;}
- L'anode est constituée de carbone et la cathode de MnO_{2;}
- L'anode est constituée de carbone et la cathode de LiMn₂O_{4;}
- L'anode est constituée de carbone et la cathode de LiNi₀.5Mn₁.5O_{4;}
- L'anode est constituée de carbone et la cathode de UCoO₂ ;
- L'anode est constituée de carbone et la cathode de LiTiS_{2;}
- L'anode est constituée de carbone et la cathode de V₂O_{5;}
- L'anode est constituée de carbone et la cathode de LiV₃O_{8;}
- L'anode est constituée de carbone et la cathode de LiFePO_{4;}
- L'anode est constituée de carbone et la cathode de LiCoPO_{4;}
- L'anode est constituée de carbone et la cathode de LiNiPO_{4;}
- L'anode est constituée de carbone et la cathode de LiMnPO_{4;}
- L'anode est constituée de carbone et la cathode de LiCuPO_{4;}
- L'anode est constituée de carbone et la cathode de LiFePO₄F_{;}
- L'anode est constituée de carbone et la cathode de Cu₃(PO₄)_{2;}
- L'anode est constituée de carbone et la cathode de Li₂Co_{1-*x*}Fe*ₓ*PO₄F_{;}
- L'anode est constituée de carbone et la cathode de Li₂Co_{1-*x*}FeMn*ₓ*PO₄F_{;}
- L'anode est constituée de graphène et la cathode de MnO_{2;}
- L'anode est constituée de graphène et la cathode de LiMn₂O_{4;}
- L'anode est constituée de graphène et la cathode de LiNi₀.5Mn₁.5O_{4;}
- L'anode est constituée de graphène et la cathode de UCoO₂ ;
- L'anode est constituée de graphène et la cathode de LiTiS_{2;}
- L'anode est constituée de graphène et la cathode de V₂O_{5;}
- L'anode est constituée de graphène et la cathode de LiV₃O_{8;}
- L'anode est constituée de graphène et la cathode de LiFePO_{4;}
- L'anode est constituée de graphène et la cathode de LiCoPO_{4;}
- L'anode est constituée de graphène et la cathode de LiNiPO_{4;}
- L'anode est constituée de graphène et la cathode de LiMnPO_{4;}
- L'anode est constituée de graphène et la cathode de LiCuPO_{4;}
- L'anode est constituée de graphène et la cathode de LiFePO₄F_{;}
- L'anode est constituée de graphène et la cathode de Cu₃(PO₄)_{2;}
- L'anode est constituée de graphène et la cathode de Li₂Co_{1-*x*}Fe*ₓ*PO₄F_{;}
- L'anode est constituée de graphène et la cathode de Li₂Co_{1-*x*}FeMnₓPO₄F_{;}
- L'anode est constituée de Sn et la cathode de MnO_{2;}
- L'anode est constituée de Sn et la cathode de LiMn₂O_{4;}
- L'anode est constituée de Sn et la cathode de LiNi₀.5Mn₁.5O_{4;}
- L'anode est constituée de Sn et la cathode de UCoO₂ ;
- L'anode est constituée de Sn et la cathode de LiTiS_{2;}
- L'anode est constituée de Sn et la cathode de V₂O_{5;}
- L'anode est constituée de Sn et la cathode de LiV₃O_{8;}
- L'anode est constituée de Sn et la cathode de LiFePO_{4;}
- L'anode est constituée de Sn et la cathode de LiCoPO_{4;}
- L'anode est constituée de Sn et la cathode de LiNiPO_{4;}
- L'anode est constituée de Sn et la cathode de LiMnPO_{4;}
- L'anode est constituée de Sn et la cathode de LiCuPO_{4;}
- L'anode est constituée de Sn et la cathode de LiFePO₄F_{;}
- L'anode est constituée de Sn et la cathode de Cu₃(PO₄)_{2;}
- L'anode est constituée de Sn et la cathode de Li₂Co_{1-*x*}Fe*ₓ*PO₄F_{;}
- L'anode est constituée de Sn et la cathode de Li₂Co_{1-*x*}FeMn*ₓ*PO₄F_{;}
- L'anode est constituée de SnFe et la cathode de MnO_{2;}
- L'anode est constituée de SnFe et la cathode de LiMn₂O_{4;}
- L'anode est constituée de SnFe et la cathode de LiNi₀.5Mn₁.5O_{4;}
- L'anode est constituée de SnFe et la cathode de UCoO₂ ;
- L'anode est constituée de SnFe et la cathode de LiTiS_{2;}
- L'anode est constituée de SnFe et la cathode de V₂O_{5;}
- L'anode est constituée de SnFe et la cathode de LiV₃O_{8;}
- L'anode est constituée de SnFe et la cathode de LiFePO_{4;}
- L'anode est constituée de SnFe et la cathode de LiCoPO_{4;}
- L'anode est constituée de SnFe et la cathode de LiNiPO_{4;}
- L'anode est constituée de SnFe et la cathode de LiMnPO_{4;}
- L'anode est constituée de SnFe et la cathode de LiCuPO_{4;}
- L'anode est constituée de SnFe et la cathode de LiFePO₄F_{;}
- L'anode est constituée de SnFe et la cathode de Cu₃(PO₄)_{2;}
- L'anode est constituée de SnFe et la cathode de Li₂Co_{1-*x*}Fe*ₓ*PO₄F_{;}
- L'anode est constituée de SnFe et la cathode de Li₂Co_{1-*x*}FeMn*ₓ*PO₄F_{;}
- L'anode est constituée de SnCo et la cathode de MnO_{2;}
- L'anode est constituée de SnCo et la cathode de LiMn₂O_{4;}
- L'anode est constituée de SnCo et la cathode de LiNi₀.5Mn₁.5O_{4;}
- L'anode est constituée de SnCo et la cathode de UCoO₂ ;
- L'anode est constituée de SnCo et la cathode de LiTiS_{2;}
- L'anode est constituée de SnCo et la cathode de V₂O_{5;}
- L'anode est constituée de SnCo et la cathode de LiV₃O_{8;}
- L'anode est constituée de SnCo et la cathode de LiFePO_{4;}
- L'anode est constituée de SnCo et la cathode de LiCoPO_{4;}
- L'anode est constituée de SnCo et la cathode de LiNiPO_{4;}
- L'anode est constituée de SnCo et la cathode de LiMnPO_{4;}
- L'anode est constituée de SnCo et la cathode de LiCuPO_{4;}
- L'anode est constituée de SnCo et la cathode de LiFePO₄F_{;}
- L'anode est constituée de SnCo et la cathode de Cu₃(PO₄)_{2;}
- L'anode est constituée de SnCo et la cathode de Li₂Co_{1-*x*}Fe*ₓ*PO₄F_{;}
- L'anode est constituée de SnCo et la cathode de Li₂Co_{1-*x*}FeMn*ₓ*PO₄F_{;}
- L'anode est constituée de SnNi et la cathode de MnO_{2;}
- L'anode est constituée de SnNi et la cathode de LiMn₂O_{4;}
- L'anode est constituée de SnNi et la cathode de LiNi₀.5Mn₁.5O_{4;}
- L'anode est constituée de SnNi et la cathode de UCoO₂ ;
- L'anode est constituée de SnNi et la cathode de LiTiS_{2;}
- L'anode est constituée de SnNi et la cathode de V₂O_{5;}
- L'anode est constituée de SnNi et la cathode de LiV₃O_{8;}
- L'anode est constituée de SnNi et la cathode de LiFePO_{4;}
- L'anode est constituée de SnNi et la cathode de LiCoPO_{4;}
- L'anode est constituée de SnNi et la cathode de LiNiPO_{4;}
- L'anode est constituée de SnNi et la cathode de LiMnPO_{4;}
- L'anode est constituée de SnNi et la cathode de LiCuPO_{4;}
- L'anode est constituée de SnNi et la cathode de LiFePO₄F_{;}
- L'anode est constituée de SnNi et la cathode de Cu₃(PO₄)_{2;}
- L'anode est constituée de SnNi et la cathode de Li₂Co_{1-*x*}Fe*ₓ*PO₄F_{;}
- L'anode est constituée de SnNi et la cathode de Li₂Co_{1-*x*}FeMn*ₓ*PO₄F_{;}
- L'anode est constituée de SnMn et la cathode de MnO_{2;}
- L'anode est constituée de SnMn et la cathode de LiMn₂O_{4;}
- L'anode est constituée de SnMn et la cathode de LiNi₀.5Mn₁.5O_{4;}
- L'anode est constituée de SnMn et la cathode de UCoO₂ ;
- L'anode est constituée de SnMn et la cathode de LiTiS_{2;}
- L'anode est constituée de SnMn et la cathode de V₂O_{5;}
- L'anode est constituée de SnMn et la cathode de LiV₃O_{8;}
- L'anode est constituée de SnMn et la cathode de LiFePO_{4;}
- L'anode est constituée de SnMn et la cathode de LiCoPO_{4;}
- L'anode est constituée de SnMn et la cathode de LiNiPO_{4;}
- L'anode est constituée de SnMn et la cathode de LiMnPO_{4;}
- L'anode est constituée de SnMn et la cathode de LiCuPO_{4;}
- L'anode est constituée de SnMn et la cathode de LiFePO₄F_{;}
- L'anode est constituée de SnMn et la cathode de Cu₃(PO₄)_{2;}
- L'anode est constituée de SnMn et la cathode de Li₂Co_{1-*x*}Fe*ₓ*PO₄F_{;}
- L'anode est constituée de SnMn et la cathode de Li₂Co_{1-*x*}FeMn*ₓ*PO₄F_{;}
- L'anode est constituée de SnCu et la cathode de MnO_{2;}
- L'anode est constituée de SnCu et la cathode de LiMn₂O_{4;}
- L'anode est constituée de SnCu et la cathode de LiNi₀.5Mn₁.5O_{4;}
- L'anode est constituée de SnCu et la cathode de UCoO₂ ;
- L'anode est constituée de SnCu et la cathode de LiTiS_{2;}
- L'anode est constituée de SnCu et la cathode de V₂O_{5;}
- L'anode est constituée de SnCu et la cathode de LiV₃O_{8;}
- L'anode est constituée de SnCu et la cathode de LiFePO_{4;}
- L'anode est constituée de SnCu et la cathode de LiCoPO_{4;}
- L'anode est constituée de SnCu et la cathode de LiNiPO_{4;}
- L'anode est constituée de SnCu et la cathode de LiMnPO_{4;}
- L'anode est constituée de SnCu et la cathode de LiCuPO_{4;}
- L'anode est constituée de SnCu et la cathode de LiFePO₄F_{;}
- L'anode est constituée de SnCu et la cathode de Cu₃(PO₄)_{2;}
- L'anode est constituée de SnCu et la cathode de Li₂Co_{1-*x*}Fe*ₓ*PO₄F_{;}
- L'anode est constituée de SnCu et la cathode de Li₂Co_{1-*x*}FeMn*ₓ*PO₄F_{;}
- L'anode est constituée de SnO et la cathode de MnO_{2;}
- L'anode est constituée de SnO et la cathode de LiMn₂O_{4;}
- L'anode est constituée de SnO et la cathode de LiNi₀.5Mn₁.5O_{4;}
- L'anode est constituée de SnO et la cathode de UCoO₂ ;
- L'anode est constituée de SnO et la cathode de LiTiS_{2;}
- L'anode est constituée de SnO et la cathode de V₂O_{5;}
- L'anode est constituée de SnO et la cathode de LiV₃O_{8;}
- L'anode est constituée de SnO et la cathode de LiFePO_{4;}
- L'anode est constituée de SnO et la cathode de LiCoPO_{4;}
- L'anode est constituée de SnO et la cathode de LiNiPO_{4;}
- L'anode est constituée de SnO et la cathode de LiMnPO_{4;}
- L'anode est constituée de SnO et la cathode de LiCuPO_{4;}
- L'anode est constituée de SnO et la cathode de LiFePO₄F_{;}
- L'anode est constituée de SnO et la cathode de Cu₃(PO₄)_{2;}
- L'anode est constituée de SnO et la cathode de Li₂Co_{1-*x*}Fe*ₓ*PO₄F_{;}
- L'anode est constituée de SnO et la cathode de Li₂Co_{1-*x*}FeMn*ₓ*PO₄F_{;}
- L'anode est constituée de SnO₂ et la cathode de MnO_{2;}
- L'anode est constituée de SnO₂ et la cathode de LiMn₂O_{4;}
- L'anode est constituée de SnO₂ et la cathode de LiNi₀.5Mn₁.5O_{4;}
- L'anode est constituée de SnO₂ et la cathode de UCoO₂ ;
- L'anode est constituée de SnO₂ et la cathode de LiTiS_{2;}
- L'anode est constituée de SnO₂ et la cathode de V₂O_{5;}
- L'anode est constituée de SnO₂ et la cathode de LiV₃O_{8;}
- L'anode est constituée de SnO₂ et la cathode de LiFePO_{4;}
- L'anode est constituée de SnO₂ et la cathode de LiCoPO_{4;}
- L'anode est constituée de SnO₂ et la cathode de LiNiPO_{4;}
- L'anode est constituée de SnO₂ et la cathode de LiMnPO_{4;}
- L'anode est constituée de SnO₂ et la cathode de LiCuPO_{4;}
- L'anode est constituée de SnO₂ et la cathode de LiFePO₄F_{;}
- L'anode est constituée de SnO₂ et la cathode de Cu₃(PO₄)_{2;}
- L'anode est constituée de SnO₂ et la cathode de Li₂Co_{1-*x*}Fe*ₓ*PO₄F_{;}
- L'anode est constituée de SnO₂ et la cathode de Li₂Co_{1-*x*}FeMn*ₓ*PO₄F_{;}
- L'anode est constituée de LiC₆ et la cathode de MnO_{2;}
- L'anode est constituée de LiC₆ et la cathode de LiMn₂O_{4;}
- L'anode est constituée de LiC₆ et la cathode de LiNi₀.5Mn₁.5O_{4;}
- L'anode est constituée de LiC₆ et la cathode de UCoO₂ ;
- L'anode est constituée de LiC₆ et la cathode de LiTiS_{2;}
- L'anode est constituée de LiC₆ et la cathode de V₂O_{5;}
- L'anode est constituée de LiC₆ et la cathode de LiV₃O_{8;}
- L'anode est constituée de LiC₆ et la cathode de LiFePO_{4;}
- L'anode est constituée de LiC₆ et la cathode de LiCoPO_{4;}
- L'anode est constituée de LiC₆ et la cathode de LiNiPO_{4;}
- L'anode est constituée de LiC₆ et la cathode de LiMnPO_{4;}
- L'anode est constituée de LiC₆ et la cathode de LiCuPO_{4;}
- L'anode est constituée de LiC₆ et la cathode de LiFePO₄F_{;}
- L'anode est constituée de LiC₆ et la cathode de Cu₃(PO₄)_{2;}
- L'anode est constituée de LiC₆ et la cathode de Li₂Co_{1-*x*}Fe*ₓ*PO₄F_{;}
- L'anode est constituée de LiC₆ et la cathode de Li₂Co_{1-*x*}FeMn*ₓ*PO₄F_{;}
- L'anode est constituée de silicium et la cathode de MnO_{2;}
- L'anode est constituée de silicium et la cathode de LiMn₂O_{4;}
- L'anode est constituée de silicium et la cathode de LiNi₀.5Mn₁.5O_{4;}
- L'anode est constituée de silicium et la cathode de UCoO₂ ;
- L'anode est constituée de silicium et la cathode de LiTiS_{2;}
- L'anode est constituée de silicium et la cathode de V₂O_{5;}
- L'anode est constituée de silicium et la cathode de LiV₃O_{8;}
- L'anode est constituée de silicium et la cathode de LiFePO_{4;}
- L'anode est constituée de silicium et la cathode de LiCoPO_{4;}
- L'anode est constituée de silicium et la cathode de LiNiPO_{4;}
- L'anode est constituée de silicium et la cathode de LiMnPO_{4;}
- L'anode est constituée de silicium et la cathode de LiCuPO_{4;}
- L'anode est constituée de silicium et la cathode de LiFePO₄F_{;}
- L'anode est constituée de silicium et la cathode de Cu₃(PO₄)_{2;}
- L'anode est constituée de silicium et la cathode de Li₂Co_{1-*x*}Fe*ₓ*PO₄F_{;}
- L'anode est constituée de silicium et la cathode de Li₂Co_{1-*x*}FeMn*ₓ*PO₄F_{;}
- L'anode est constituée de sodium et la cathode de MnO_{2;}
- L'anode est constituée de sodium et la cathode de LiMn₂O_{4;}
- L'anode est constituée de sodium et la cathode de LiNi₀.5Mn₁.5O_{4;}
- L'anode est constituée de sodium et la cathode de UCoO₂ ;
- L'anode est constituée de sodium et la cathode de LiTiS_{2;}
- L'anode est constituée de sodium et la cathode de V₂O_{5;}
- L'anode est constituée de sodium et la cathode de LiV₃O_{8;}
- L'anode est constituée de sodium et la cathode de LiFePO_{4;}
- L'anode est constituée de sodium et la cathode de LiCoPO_{4;}
- L'anode est constituée de sodium et la cathode de LiNiPO_{4;}
- L'anode est constituée de sodium et la cathode de LiMnPO_{4;}
- L'anode est constituée de sodium et la cathode de LiCuPO_{4;}
- L'anode est constituée de sodium et la cathode de LiFePO₄F_{;}
- L'anode est constituée de sodium et la cathode de Cu₃(PO₄)_{2;}
- L'anode est constituée de sodium et la cathode de Li₂Co_{1-*x*}Fe*ₓ*PO₄F_{;}
- L'anode est constituée de sodium et la cathode de Li₂Co_{1-*x*}FeMn*ₓ*PO₄F_{;}
- L'anode est constituée de bismuth et la cathode de MnO_{2;}
- L'anode est constituée de bismuth et la cathode de LiMn₂O_{4;}
- L'anode est constituée de bismuth et la cathode de LiNi₀.5Mn₁.5O_{4;}
- L'anode est constituée de bismuth et la cathode de UCoO₂ ;
- L'anode est constituée de bismuth et la cathode de LiTiS_{2;}
- L'anode est constituée de bismuth et la cathode de V₂O_{5;}
- L'anode est constituée de bismuth et la cathode de LiV₃O_{8;}
- L'anode est constituée de bismuth et la cathode de LiFePO_{4;}
- L'anode est constituée de bismuth et la cathode de LiCoPO_{4;}
- L'anode est constituée de bismuth et la cathode de LiNiPO_{4;}
- L'anode est constituée de bismuth et la cathode de LiMnPO_{4;}
- L'anode est constituée de bismuth et la cathode de LiCuPO_{4;}
- L'anode est constituée de bismuth et la cathode de LiFePO₄F_{;}
- L'anode est constituée de bismuth et la cathode de Cu₃(PO₄)_{2;}
- L'anode est constituée de bismuth et la cathode de Li₂Co_{1-*x*}Fe*ₓ*PO₄F_{;}
- L'anode est constituée de bismuth et la cathode de Li₂Co_{1-*x*}FeMn*ₓ*PO₄F_{;}
- L'anode est constituée de SnSb et la cathode de MnO_{2;}
- L'anode est constituée de SnSb et la cathode de LiMn₂O_{4;}
- L'anode est constituée de SnSb et la cathode de LiNi₀.5Mn₁.5O_{4;}
- L'anode est constituée de SnSb et la cathode de UCoO₂ ;
- L'anode est constituée de SnSb et la cathode de LiTiS_{2;}
- L'anode est constituée de SnSb et la cathode de V₂O_{5;}
- L'anode est constituée de SnSb et la cathode de LiV₃O_{8;}
- L'anode est constituée de SnSb et la cathode de LiFePO_{4;}
- L'anode est constituée de SnSb et la cathode de LiCoPO_{4;}
- L'anode est constituée de SnSb et la cathode de LiNiPO_{4;}
- L'anode est constituée de SnSb et la cathode de LiMnPO_{4;}
- L'anode est constituée de SnSb et la cathode de LiCuPO_{4;}
- L'anode est constituée de SnSb et la cathode de LiFePO₄F_{;}
- L'anode est constituée de SnSb et la cathode de Cu₃(PO₄)_{2;}
- L'anode est constituée de SnSb et la cathode de Li₂Co_{1-*x*}Fe*ₓ*PO₄F_{;}
- L'anode est constituée de SnSb et la cathode de Li₂Co_{1-*x*}FeMn*ₓ*PO₄F_{;}
- L'anode est constituée de LiFeyN₂ et la cathode de MnO_{2;}
- L'anode est constituée de LiFeyN₂ et la cathode de LiMn₂O_{4;}
- L'anode est constituée de LiFeyN₂ et la cathode de LiNi₀.5Mn₁.5O_{4;}
- L'anode est constituée de LiFeyN₂ et la cathode de UCoO₂ ;
- L'anode est constituée de LiFeyN₂ et la cathode de LiTiS_{2;}
- L'anode est constituée de LiFeyN₂ et la cathode de V₂O_{5;}
- L'anode est constituée de LiFeyN₂ et la cathode de LiV₃O_{8;}
- L'anode est constituée de LiFeyN₂ et la cathode de LiFePO_{4;}
- L'anode est constituée de LiFeyN₂ et la cathode de LiCoPO_{4;}
- L'anode est constituée de LiFeyN₂ et la cathode de LiNiPO_{4;}
- L'anode est constituée de LiFeyN₂ et la cathode de LiMnPO_{4;}
- L'anode est constituée de LiFeyN₂ et la cathode de LiCuPO_{4;}
- L'anode est constituée de LiFeyN₂ et la cathode de LiFePO₄F_{;}
- L'anode est constituée de LiFeyN₂ et la cathode de Cu₃(PO₄)_{2;}
- L'anode est constituée de LiFeyN₂ et la cathode de Li₂Co_{1-*x*}Fe*ₓ*PO₄F_{;}
- L'anode est constituée de LiFeyN₂ et la cathode de Li₂Co_{1-*x*}FeMn*ₓ*PO₄F_{;}
- L'anode est constituée de LiCoyN₂ et la cathode de MnO_{2;}
- L'anode est constituée de LiCoyN₂ et la cathode de LiMn₂O_{4;}
- L'anode est constituée de LiCoyN₂ et la cathode de LiNi₀.5Mn₁.5O_{4;}
- L'anode est constituée de LiCoyN₂ et la cathode de UCoO₂ ;
- L'anode est constituée de LiCoyN₂ et la cathode de LiTiS_{2;}
- L'anode est constituée de LiCoyN₂ et la cathode de V₂O_{5;}
- L'anode est constituée de LiCoyN₂ et la cathode de LiV₃O_{8;}
- L'anode est constituée de LiCoyN₂ et la cathode de LiFePO_{4;}
- L'anode est constituée de LiCoyN₂ et la cathode de LiCoPO_{4;}
- L'anode est constituée de LiCoyN₂ et la cathode de LiNiPO_{4;}
- L'anode est constituée de LiCoyN₂ et la cathode de LiMnPO_{4;}
- L'anode est constituée de LiCoyN₂ et la cathode de LiCuPO_{4;}
- L'anode est constituée de LiCoyN₂ et la cathode de LiFePO₄F_{;}
- L'anode est constituée de LiCoyN₂ et la cathode de Cu₃(PO₄)_{2;}
- L'anode est constituée de LiCoyN₂ et la cathode de Li₂Co_{1-*x*}Fe*ₓ*PO₄F_{;}
- L'anode est constituée de LiCoyN₂ et la cathode de Li₂Co_{1-*x*}FeMn*ₓ*PO₄F_{;}
- L'anode est constituée de LiNiyN₂ et la cathode de MnO_{2;}
- L'anode est constituée de LiNiyN₂ et la cathode de LiMn₂O_{4;}
- L'anode est constituée de LiNiyN₂ et la cathode de LiNi₀.5Mn₁.5O_{4;}
- L'anode est constituée de LiNiyN₂ et la cathode de UCoO₂ ;
- L'anode est constituée de LiNiyN₂ et la cathode de LiTiS_{2;}
- L'anode est constituée de LiNiyN₂ et la cathode de V₂O_{5;}
- L'anode est constituée de LiNiyN₂ et la cathode de LiV₃O_{8;}
- L'anode est constituée de LiNiyN₂ et la cathode de LiFePO_{4;}
- L'anode est constituée de LiNiyN₂ et la cathode de LiCoPO_{4;}
- L'anode est constituée de LiNiyN₂ et la cathode de LiNiPO_{4;}
- L'anode est constituée de LiNiyN₂ et la cathode de LiMnPO_{4;}
- L'anode est constituée de LiNiyN₂ et la cathode de LiCuPO_{4;}
- L'anode est constituée de LiNiyN₂ et la cathode de LiFePO₄F_{;}
- L'anode est constituée de LiNiyN₂ et la cathode de Cu₃(PO₄)_{2;}
- L'anode est constituée de LiNiyN₂ et la cathode de Li₂Co_{1-*x*}Fe*ₓ*PO₄F_{;}
- L'anode est constituée de LiNiyN₂ et la cathode de Li₂Co_{1-*x*}FeMn*ₓ*PO₄F_{;}
- L'anode est constituée de LiMnyN₂ et la cathode de MnO_{2;}
- L'anode est constituée de LiMnyN₂ et la cathode de LiMn₂O_{4;}
- L'anode est constituée de LiMnyN₂ et la cathode de LiNi₀.5Mn₁.5O_{4;}
- L'anode est constituée de LiMnyN₂ et la cathode de UCoO₂ ;
- L'anode est constituée de LiMnyN₂ et la cathode de LiTiS_{2;}
- L'anode est constituée de LiMnyN₂ et la cathode de V₂O_{5;}
- L'anode est constituée de LiMnyN₂ et la cathode de LiV₃O_{8;}
- L'anode est constituée de LiMnyN₂ et la cathode de LiFePO_{4;}
- L'anode est constituée de LiMnyN₂ et la cathode de LiCoPO_{4;}
- L'anode est constituée de LiMnyN₂ et la cathode de LiNiPO_{4;}
- L'anode est constituée de LiMnyN₂ et la cathode de LiMnPO_{4;}
- L'anode est constituée de LiMnyN₂ et la cathode de LiCuPO_{4;}
- L'anode est constituée de LiMnyN₂ et la cathode de LiFePO₄F_{;}
- L'anode est constituée de LiMnyN₂ et la cathode de Cu₃(PO₄)_{2;}
- L'anode est constituée de LiMnyN₂ et la cathode de Li₂Co_{1-*x*}Fe*ₓ*PO₄F_{;}
- L'anode est constituée de LiMnyN₂ et la cathode de Li₂Co_{1-*x*}FeMn*ₓ*PO₄F_{;}
- L'anode est constituée de LiCuyN₂ et la cathode de MnO_{2;}
- L'anode est constituée de LiCuyN₂ et la cathode de LiMn₂O_{4;}
- L'anode est constituée de LiCuyN₂ et la cathode de LiNi₀.5Mn₁.5O_{4;}
- L'anode est constituée de LiCuyN₂ et la cathode de UCoO₂ ;
- L'anode est constituée de LiCuyN₂ et la cathode de LiTiS_{2;}
- L'anode est constituée de LiCuyN₂ et la cathode de V₂O_{5;}
- L'anode est constituée de LiCuyN₂ et la cathode de LiV₃O_{8;}
- L'anode est constituée de LiCuyN₂ et la cathode de LiFePO_{4;}
- L'anode est constituée de LiCuyN₂ et la cathode de LiCoPO_{4;}
- L'anode est constituée de LiCuyN₂ et la cathode de LiNiPO_{4;}
- L'anode est constituée de LiCuyN₂ et la cathode de LiMnPO_{4;}
- L'anode est constituée de LiCuyN₂ et la cathode de LiCuPO_{4;}
- L'anode est constituée de LiCuyN₂ et la cathode de LiFePO₄F_{;}
- L'anode est constituée de LiCuyN₂ et la cathode de Cu₃(PO₄)_{2;}
- L'anode est constituée de LiCuyN₂ et la cathode de Li₂Co_{1-*x*}Fe*ₓ*PO₄F_{;}
- L'anode est constituée de LiCuyN₂ et la cathode de Li₂Co_{1-*x*}FeMn*ₓ*PO₄F_{;}
- L'anode est constituée de TiO₂ et la cathode de MnO_{2;}
- L'anode est constituée de TiO₂ et la cathode de LiMn₂O_{4;}
- L'anode est constituée de TiO₂ et la cathode de LiNi₀.5Mn₁.5O_{4;}
- L'anode est constituée de TiO₂ et la cathode de UCoO₂ ;
- L'anode est constituée de TiO₂ et la cathode de LiTiS_{2;}
- L'anode est constituée de TiO₂ et la cathode de V₂O_{5;}
- L'anode est constituée de TiO₂ et la cathode de LiV₃O_{8;}
- L'anode est constituée de TiO₂ et la cathode de LiFePO_{4;}
- L'anode est constituée de TiO₂ et la cathode de LiCoPO_{4;}
- L'anode est constituée de TiO₂ et la cathode de LiNiPO_{4;}
- L'anode est constituée de TiO₂ et la cathode de LiMnPO_{4;}
- L'anode est constituée de TiO₂ et la cathode de LiCuPO_{4;}
- L'anode est constituée de TiO₂ et la cathode de LiFePO₄F_{;}
- L'anode est constituée de TiO₂ et la cathode de Cu₃(PO₄)_{2;}
- L'anode est constituée de TiO₂ et la cathode de Li₂Co_{1-*x*}Fe*ₓ*PO₄F_{;}
- L'anode est constituée de TiO₂ et la cathode de Li₂Co_{1-*x*}FeMn*ₓ*PO₄F_{;}
- L'anode est constituée de Li₄Ti₅O₁₂ et la cathode de MnO_{2;}
- L'anode est constituée de Li₄Ti₅O₁₂ et la cathode de LiMn₂O_{4;}
- L'anode est constituée de Li₄Ti₅O₁₂ et la cathode de LiNi₀.5Mn₁.5O_{4;}
- L'anode est constituée de Li₄Ti₅O₁₂ et la cathode de UCoO₂ ;
- L'anode est constituée de Li₄Ti₅O₁₂ et la cathode de LiTiS_{2;}
- L'anode est constituée de Li₄Ti₅O₁₂ et la cathode de V₂O_{5;}
- L'anode est constituée de Li₄Ti₅O₁₂ et la cathode de LiV₃O_{8;}
- L'anode est constituée de Li₄Ti₅O₁₂ et la cathode de LiFePO_{4;}
- L'anode est constituée de Li₄Ti₅O₁₂ et la cathode de LiCoPO_{4;}
- L'anode est constituée de Li₄Ti₅O₁₂ et la cathode de LiNiPO_{4;}
- L'anode est constituée de Li₄Ti₅O₁₂ et la cathode de LiMnPO_{4;}
- L'anode est constituée de Li₄Ti₅O₁₂ et la cathode de LiCuPO_{4;}
- L'anode est constituée de Li₄Ti₅O₁₂ et la cathode de LiFePO₄F_{;}
- L'anode est constituée de Li₄Ti₅O₁₂ et la cathode de Cu₃(PO₄)_{2;}
- L'anode est constituée de Li₄Ti₅O₁₂ et la cathode de Li₂Co_{1-*x*}Fe*ₓ*PO₄F_{;} ou
- L'anode est constituée de Li₄Ti₅O₁₂ et la cathode de Li₂Co_{1-*x*}FeMn*ₓ*PO₄F_{;}

Le procédé de déposition et de structuration en micro-pilier de chaque électrode est choisi, parmi les procédés connus de dépôt en couche, adapté au matériau actif considéré. On pourra notamment envisager les procédés conventionnels tels que spin coating, dip-coating, doctor blade, ou électrodéposition.

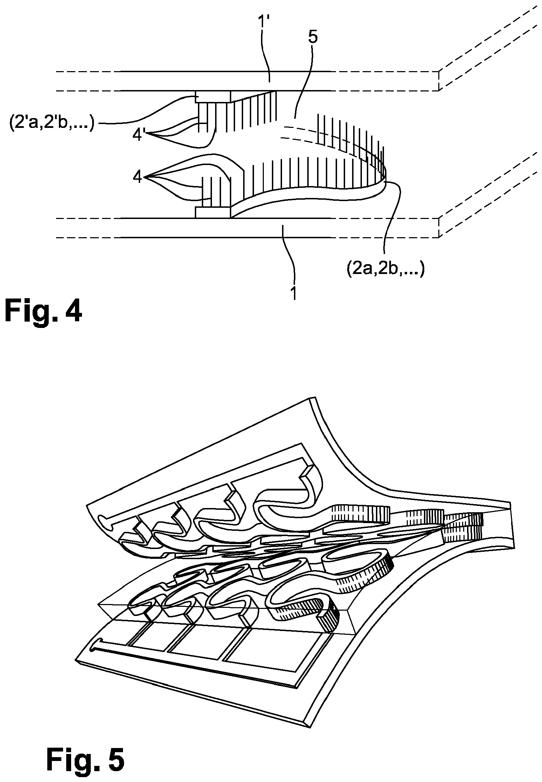

Selon un mode de réalisation de l'invention, un premier substrat 1 muni de son ou ses collecteurs de courant d'anode en serpentins 2a, 2b,... sur lesquels est déposée une anode 4 en rangées de micro-piliers, est placé en vis-à-vis d'un deuxième substrat 1' muni de son ou ses collecteurs de courant d'électrode en serpentins 2'a, 2'b,... sur lesquels est déposée une cathode 4' en rangées de micro-piliers. La distance qui sépare les deux faces en vis-à-vis doit être suffisante pour qu'il n'y ait pas de contact électrique, donc pas de court-circuit, entre les micro-piliers de l'anode et ceux de la cathode. La figure 4 illustre schématiquement cette configuration des éléments constitutifs de l'élément de stockage d'énergie électrique. L'espace 5 sépare les deux substrats 1 et 1' ; l'espace 5 sépare également les micro-piliers d'anode 4 entre eux, et les micro-piliers de cathode 4' entre eux, et sépare enfin les micro-piliers d'anode 4 des micro-piliers de cathode 4'. L'espace 5 est rempli d'un électrolyte réalisé dans un matériau de type polymère auto-réparant.

L'électrolyte est réalisé dans un matériau choisi parmi une liste de matériaux de type polymère auto-réparant ; l'électrolyte polymère auto-réparant sera obtenu par combinaison de deux autres ayant des fonctions différentes :
- la fonction d'auto-réparation, grâce à la présence de liaisons hydrogènes pendantes ;
- la fonction de conducteur ionique ;

Les polymères auto-réparants sont ainsi obtenus via la fonctionnalisation de monomères auto-réparants avec d'autres polymères conducteurs ioniques comme de l'oxyde de polyéthylène (PEO) de différentes masses molaires, le polyéthylène glycol (PEG), le polystyrène (PS), par polymérisation radicalaire contrôlée. Des blocks durs tels que PS, PMMA ou souples tels que PABu peuvent être gréffés afin de contrôler la dureté et l'étirabilité des monomères autoréparants.

Comme exemples préférés d'accumulateurs déformables selon la présente invention, on peut notamment citer les accumulateurs déformables dans lesquels l'électrolyte est un POE-b-poly(5-acetylaminopentyl acrylate), ou un POE-b-PS-g-poly(5-acetylaminopentyl acrylate), ou un PEG-b-poly(5-acetylaminopentyl acrylate) ou un PEG-b-6-(2-ureido-4-pyrimidinone)hexyl acrylate, ou encore un polymère dont le motif principal est choisi comme étant l'un de ceux représentés ci-dessous :

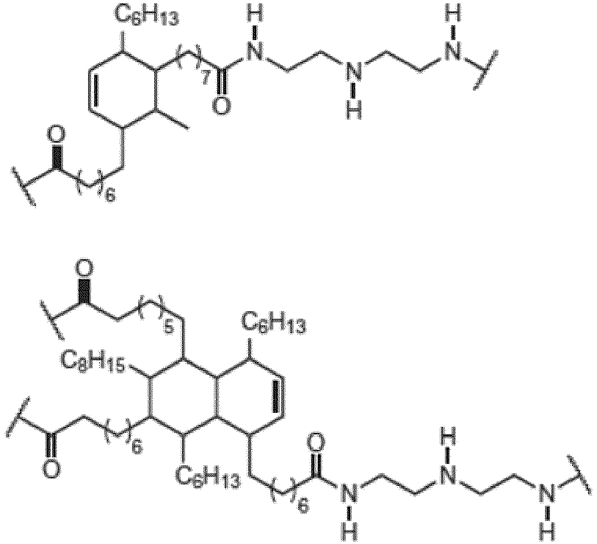

Le procédé de dépôt de l'électrolyte entre les deux substrats et les micro-piliers d'électrodes est choisi parmi les procédés connus, et adaptés au copolymère blocs considéré.

En cas d'étirement de l'élément de stockage d'énergie électrique, la structuration des électrodes en micro-piliers espacés présente un premier avantage d'éviter la formation de fractures dans le matériau constituant l'électrode, ou à l'interface entre l'électrode et le collecteur de courant.

Cette structuration présente un deuxième avantage ; elle permet de mieux supporter les variations de volume des électrodes qui résultent des extractions/insertions successives des ions Li+, et d'éviter les pertes de contact à l'interface entre l'électrolyte et l'électrode, dans le cas de batteries Lithium ion.

En outre, un troisième avantage de cette structuration en micro-piliers réside dans l'accroissement de la surface de contact entre l'électrode et l'électrolyte, ce qui augmente d'autant la densité d'énergie et de puissance disponible par unité de surface.

Enfin, un quatrième avantage réside dans la diminution importante de la résistance électrique dite série entre les électrodes et les collecteurs de courant, assurée par le contact électrique direct entre ces derniers, contrairement aux interconnexions en longs serpentins de l'art antérieur.

Enfin, l'utilisation de polymères auto-réparant contribuera au maintien d'une interface saine et continue entre les électrodes et l'électrolyte à la suite des étirements de la batterie.

L'invention concerne également un procédé de fabrication de l'élément de stockage déformable. Ce procédé comprend les étapes suivantes :
a. Préparer un premier et un deuxième substrat ;
b. Déposer au moins un premier collecteur de courant (2a, 2b, ...) sur au moins une partie d'une face du premier substrat, à proximité et le long d'une au moins première portion de ligne courbe dont la longueur est supérieure à la distance entre ses deux extrémités,
c. Déposer au moins un deuxième collecteur de courant (2a', 2b', ...) sur au moins une partie d'une face du deuxième substrat, à proximité et de chaque côté d'une au moins deuxième ligne courbe dont la longueur est supérieure à la distance entre ses deux extrémités,
d. Déposer une anode constituée d'un premier ensemble de piliers (4), sur le au moins un premier collecteur de courant (2a, 2b, ...), les piliers du premier ensemble étant espacés les uns des autres sur une surface du premier collecteur,
e. Déposer une cathode constituée d'un deuxième ensemble de piliers (4'), sur le au moins un deuxième collecteur de courant (2a', 2b', ...), les piliers du deuxième ensemble étant espacés les uns des autres sur une surface du deuxième collecteur,
f. Déposer un électrolyte sur les faces du premier et du deuxième substrat sur lesquelles sont déposés respectivement le au moins un premier et le au moins un deuxième collecteur de courant en immergeant les piliers de l'anode (4) et de la cathode (4') dans l'électrolyte, puis placer ces faces en vis-à-vis
   ou
   placer en vis-à-vis les faces du premier et du deuxième substrat sur lesquelles sont déposés respectivement le au moins un premier et le au moins un deuxième collecteur de courant puis déposer un électrolyte dans le volume (5) délimité par ces faces en immergeant les piliers de l'anode (4) et de la cathode (4') dans l'électrolyte.

L'ordre dans lequel les étapes sont citées ne préjuge pas de l'ordre dans lequel elles doivent être réalisées.

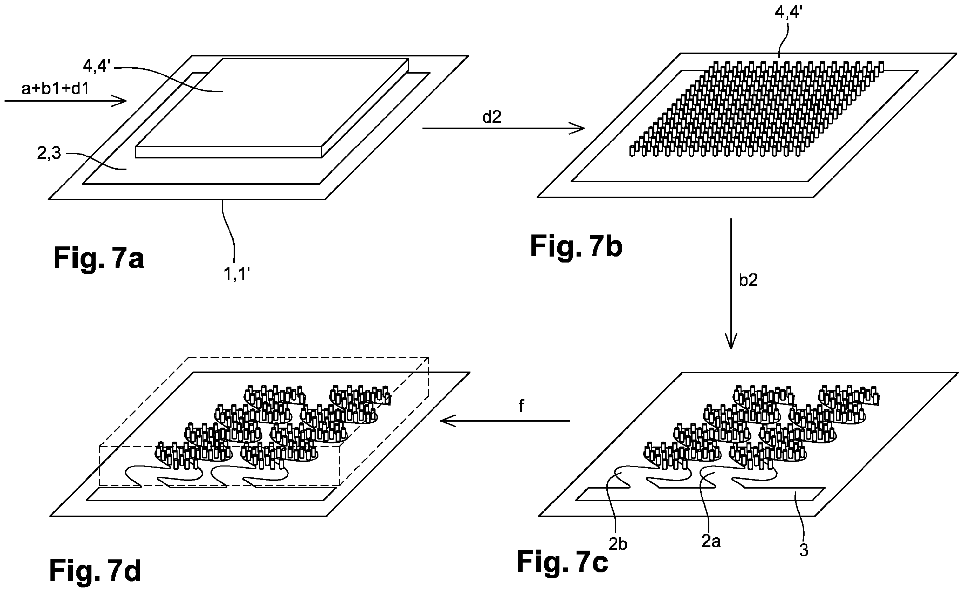

Un mode de réalisation d'une des faces de l'accumulateur déformable selon le procédé, et plus précisément selon la première option de l'étape f de ce procédé, est représenté sur la figure 7 au travers des produits intermédiaires formés à différentes étapes.

Ainsi à la figure 7a est présenté le produit intermédiaire qui résulte de la combinaison des étapes a, avec la mise en place d'un premier substrat, suivie d'une première partie b1 de l'étape b, avec le dépôt d'un premier collecteur de courant et d'une première partie d1 de l'étape d, avec le dépôt de l'anode ou de la cathode (4,4'). A ce stade intermédiaire les serpentins du collecteur et les micro-piliers de l'électrode ne sont pas encore formés.

La formation des micro-piliers de l'électrode est réalisée ensuite par photolithographie ; c'est la deuxième partie d2 de l'étape d, dont le résultat est présenté à la figure 7b.

Puis les serpentins 2a, 2b sont formés par gravure au laser, avec la deuxième partie b2 de l'étape b, dont le résultat intermédiaire est représenté à la figure 7c.

Enfin, avec la dernière étape f, l'électrolyte est déposé par un procédé dit de « dip-coating », dont le résultat intermédiaire est schématiquement représenté figure 7d.

## Revendications

1. Accumulateur déformable comprenant :
a. un premier et un deuxième substrats plans déformables (1,1'),
b. au moins un premier collecteur étirable de courant (2a, 2b, ...) déposé sur au moins une partie d'une face du premier substrat, à proximité et le long d'une au moins première portion de ligne courbe dont la longueur est supérieure à la distance entre ses deux extrémités,
c. au moins un deuxième collecteur étirable de courant (2a', 2b', ...) déposé sur au moins une partie d'une face du deuxième substrat, à proximité et de chaque côté d'une au moins deuxième ligne courbe dont la longueur est supérieure à la distance entre ses deux extrémités,
d. une anode constituée d'un premier ensemble de piliers (4), déposés sur le au moins un premier collecteur de courant (2a, 2b, ...), les piliers du premier ensemble étant espacés les uns des autres sur une surface du premier collecteur, les piliers du premier ensemble de piliers (4) ayant une hauteur comprise entre 1 µm et 1000 µm, et une largeur comprise entre 1 µm et 100 µm,
e. une cathode constituée d'un deuxième ensemble de piliers (4'), déposés sur le au moins un deuxième collecteur de courant (2a', 2b', ...), les piliers du deuxième ensemble étant espacés les uns des autres sur une surface du deuxième collecteur, les piliers du deuxième ensemble de piliers (4') ayant une hauteur comprise entre 1 µm et 1000 µm, et une largeur comprise entre 1 µm et 100 µm,
f. un électrolyte permettant le transfert des espèces ioniques, les faces du premier et du deuxième substrat, sur lesquelles sont déposés respectivement le au moins un premier et le au moins un deuxième collecteur de courant, étant placées en vis-à-vis et délimitant un volume (5) occupé par l'électrolyte dans lequel les piliers de l'anode (4) et de la cathode (4') sont immergés.

2. Accumulateur selon la revendication 1, dans lequel l'électrolyte est un polymère comprenant des liaisons hydrogènes pendantes.

3. Accumulateur selon les revendications précédentes, dans lequel la hauteur d'un premier pilier du premier ensemble étant inférieure à une première hauteur, et la hauteur des deuxièmes piliers du deuxième ensemble qui sont en vis-à-vis de ce premier pilier étant inférieure à une deuxième hauteur, la distance qui sépare les faces du premier et du deuxième substrat en vis-à-vis autour du premier pilier est supérieure à la somme de la première hauteur et de la deuxième hauteur.

4. Accumulateur selon les revendications précédentes dans lequel la largeur des collecteurs de courant est comprise entre 100 µm et 400 µm.

5. Accumulateur selon les revendications précédentes dans lequel les piliers sont espacés d'une distance comprise entre 0.1 µm et 20 µm.

6. Accumulateur selon la revendication précédente dans lequel les piliers sont espacés d'une distance comprise entre 2 µm et 10 µm.

7. Accumulateur selon la revendication 1 dans lequel les piliers présentent une hauteur comprise entre 10 µm et 100 µm.

8. Accumulateur selon la revendication 1 dans lequel les piliers présentent une largeur comprise entre 2 µm et 10 µm.

9. Procédé de fabrication d'un accumulateur selon l'une des revendications précédentes, comprenant les étapes suivantes :
a. Préparer un premier et un deuxième substrat ;
b. Déposer au moins un premier collecteur étirable de courant (2a, 2b, ...) sur au moins une partie d'une face du premier substrat, à proximité et le long d'une au moins première portion de ligne courbe dont la longueur est supérieure à la distance entre ses deux extrémités,
c. Déposer au moins un deuxième collecteur étirable de courant (2a', 2b', ...) sur au moins une partie d'une face du deuxième substrat, à proximité et de chaque côté d'une au moins deuxième ligne courbe dont la longueur est supérieure à la distance entre ses deux extrémités,
d. Déposer une anode constituée d'un premier ensemble de piliers (4), sur le au moins un premier collecteur de courant (2a, 2b, ...), les piliers du premier ensemble étant espacés les uns des autres sur une surface du premier collecteur, les piliers du premier ensemble de piliers (4) ayant une hauteur comprise entre 1 µm et 1000 µm, et une largeur comprise entre 1 µm et 100 µm,
e. Déposer une cathode constituée d'un deuxième ensemble de piliers (4'), sur le au moins un deuxième collecteur de courant (2a', 2b', ...), les piliers du deuxième ensemble étant espacés les uns des autres sur une surface du deuxième collecteur, les piliers du deuxième ensemble de piliers (4') ayant une hauteur comprise entre 1 µm et 1000 µm, et une largeur comprise entre 1 µm et 100 µm,
f. Déposer un électrolyte sur les faces du premier et du deuxième substrat sur lesquelles sont déposés respectivement le au moins un premier et le au moins un deuxième collecteur de courant en immergeant les piliers de l'anode (4) et de la cathode (4') dans l'électrolyte, puis placer ces faces en vis-à-vis
ou
placer en vis-à-vis les faces du premier et du deuxième substrat sur lesquelles sont déposés respectivement le au moins un premier et le au moins un deuxième collecteur de courant, puis déposer un électrolyte dans le volume (5) délimité par ces faces en immergeant les piliers de l'anode (4) et de la cathode (4') dans l'électrolyte.

## Patentansprüche

1. Verformbarer Akkumulator, umfassend:
a. ein erstes und ein zweites ebenes, verformbares Substrat (1, 1'),
b. mindestens einen ersten dehnbaren Stromkollektor (2a, 2b, ...), der auf mindestens einem Teil einer Fläche des ersten Substrats abgesetzt ist, in der Nähe und entlang eines mindestens ersten Abschnitts einer gekrümmten Linie, deren Länge größer ist als der Abstand zwischen ihren zwei Enden,
c. mindestens einen zweiten dehnbaren Stromkollektor (2a', 2b', ...), der auf mindestens einem Teil einer Fläche des zweiten Substrats abgesetzt ist, in der Nähe und auf jeder Seite einer mindestens zweiten gekrümmten Linie, deren Länge größer ist als der Abstand zwischen ihren zwei Enden,
d. eine Anode, die von einer ersten Einheit aus Säulen (4) gebildet ist, die auf dem mindestens einen ersten Stromkollektor (2a, 2b, ...) abgesetzt sind, wobei die Säulen der ersten Einheit auf einer Oberfläche des ersten Kollektors voneinander beabstandet sind, wobei die Säulen der ersten Einheit aus Säulen (4) eine Höhe aufweisen, die zwischen 1 µm und 1000 µm beträgt, und eine Breite, die zwischen 1 µm und 100 µm beträgt,
e. eine Kathode, die von einer zweiten Einheit aus Säulen (4') gebildet ist, die auf dem mindestens einen zweiten Stromkollektor (2a', 2b', ...) abgesetzt sind, wobei die Säulen der zweiten Einheit auf einer Oberfläche des zweiten Kollektors voneinander beabstandet sind, wobei die Säulen der zweiten Einheit aus Säulen (4') eine Höhe aufweisen, die zwischen 1 µm und 1000 µm beträgt, und eine Breite, die zwischen 1 µm und 100 µm beträgt,
f. einen Elektrolyt, welcher die Übertragung ionischer Spezies ermöglicht, wobei die Flächen des ersten und des zweiten Substrats, auf denen jeweils der mindestens eine erste und der mindestens eine zweite Stromkollektor abgesetzt sind, gegenüberliegend platziert sind und ein Volumen (5) begrenzen, das von dem Elektrolyt besetzt ist, in den die Säulen der Anode (4) und der Kathode (4') eingetaucht sind.

2. Akkumulator nach Anspruch 1, wobei der Elektrolyt ein Polymer ist, das anhängende Wasserstoffbindungen umfasst.

3. Akkumulator nach den vorstehenden Ansprüchen, wobei die Höhe einer ersten Säule der ersten Einheit kleiner ist als eine erste Höhe und die Höhe der zweiten Säulen der zweiten Einheit, die sich dieser ersten Säule gegenüberliegend befinden, kleiner ist als eine zweite Höhe, wobei der Abstand, der die Flächen des ersten und des zweiten Substrats gegenüberliegend um die erste Säule trennt, größer ist als die Summe der ersten Höhe und der zweiten Höhe.

4. Akkumulator nach den vorstehenden Ansprüchen, wobei die Breite der Stromkollektoren zwischen 100 µm und 400 µm beträgt.

5. Akkumulator nach den vorstehenden Ansprüchen, wobei die Säulen in einem Abstand beabstandet sind, der zwischen 0,1 µm und 20 µm beträgt.

6. Akkumulator nach dem vorstehenden Anspruch, wobei die Säulen in einem Abstand beabstandet sind, der zwischen 2 µm und 10 µm beträgt.

7. Akkumulator nach Anspruch 1, wobei die Säulen eine Höhe aufweisen, die zwischen 10 µm und 100 µm beträgt.

8. Akkumulator nach Anspruch 1, wobei die Säulen eine Breite aufweisen, die zwischen 2 µm und 10 µm beträgt.

9. Verfahren zur Herstellung eines Akkumulators nach einem der vorstehenden Ansprüche, umfassend folgende Schritte:
a. Vorbereiten eines ersten und eines zweiten Substrats;
b. Absetzen mindestens eines ersten dehnbaren Stromkollektors (2a, 2b, ...) auf mindestens einem Teil einer Fläche des ersten Substrats, in der Nähe und entlang eines mindestens ersten Abschnitts einer gekrümmten Linie, deren Länge größer ist als der Abstand zwischen ihren zwei Enden,
c. Absetzen mindestens eines zweiten dehnbaren Stromkollektors (2a', 2b', ...) auf mindestens einem Teil einer Fläche des zweiten Substrats, in der Nähe und auf jeder Seite einer mindestens zweiten gekrümmten Linie, deren Länge größer ist als der Abstand zwischen ihren zwei Enden,
d. Absetzen einer Anode, die von einer ersten Einheit aus Säulen (4) gebildet ist, auf dem mindestens einen ersten Stromkollektor (2a, 2b, ...), wobei die Säulen der ersten Einheit auf einer Oberfläche des ersten Kollektors voneinander beabstandet sind, wobei die Säulen der ersten Einheit aus Säulen (4) eine Höhe aufweisen, die zwischen 1 µm und 1000 µm beträgt, und eine Breite, die zwischen 1 µm und 100 µm beträgt,
e. Absetzen einer Kathode, die von einer zweiten Einheit aus Säulen (4') gebildet ist, auf dem mindestens einen zweiten Stromkollektor (2a', 2b', ...), wobei die Säulen der zweiten Einheit auf einer Oberfläche des zweiten Kollektors voneinander beabstandet sind, wobei die Säulen der zweiten Einheit aus Säulen (4') eine Höhe aufweisen, die zwischen 1 µm und 1000 µm beträgt, und eine Breite, die zwischen 1 µm und 100 µm beträgt,
f. Absetzen eines Elektrolyts auf den Flächen des ersten und des zweiten Substrats, auf denen jeweils der mindestens eine erste und der mindestens eine zweite Stromkollektor abgesetzt sind, indem die Säulen der Anode (4) und der Kathode (4') in den Elektrolyt eingetaucht werden, danach gegenüberliegendes Platzieren dieser Flächen
oder
gegenüberliegendes Platzieren der Flächen des ersten und des zweiten Substrats, auf denen jeweils der mindestens eine erste und der mindestens eine zweite Stromkollektor abgesetzt sind, danach Absetzen eines Elektrolyts in dem Volumen (5), das von diesen Flächen begrenzt wird, indem die Säulen der Anode (4) und der Kathode (4') in den Elektrolyt eingetaucht werden.

## Claims

1. A deformable accumulator comprising:
a. first and second deformable planar substrates (1, 1'),
b. at least one first stretchable current collector (2a, 2b, ...) which is deposited on at least one portion of a face of the first substrate, in the vicinity and along at least one first portion of a curved line whose length is greater than the distance between the two ends thereof,
c. at least one second stretchable current collector (2a', 2b', ...) deposited on at least one portion of a face of the second substrate, in the vicinity and on each side of at least one second curved line whose length is greater than the distance between the two ends thereof,
d. an anode consisting of a first set of pillars (4) deposited on the at least one first current collector (2a, 2b, ...), the pillars of the first set being spaced from each other on a surface of the first collector, the pillars of the first set of pillars (4) having a height comprised between 1 µm and 1000 µm, and a width comprised between 1 µm and 100 µm,
e. a cathode consisting of a second set of pillars (4'), deposited on the at least one second current collector (2a', 2b', ...), the pillars of the second set being spaced from each other on a surface of the second collector, the pillars of the second set of pillars (4') having a height comprised between 1 µm and 1000 µm, and a width comprised between 1 µm and 100 µm,
f. an electrolyte allowing the transfer of the ionic species,
the faces of the first and second substrates, on which the at least one first and at least one second current collectors are deposited respectively, being placed facing each other and delimiting a volume (5) which is occupied by the electrolyte in which the pillars of the anode (4) and the cathode (4') are immersed.

2. The accumulator according to claim 1, wherein the electrolyte is a polymer comprising dangling hydrogen bonds.

3. The accumulator according to the preceding claims, wherein the height of a first pillar of the first set being less than a first height, and the height of the second pillars of the second set which are opposite to this first pillar being less than a second height, the distance which separates the faces of the first and second substrates facing each other around the first pillar is greater than the sum of the first height and the second height.

4. The accumulator according to the preceding claims, wherein the width of the current collectors is comprised between 100 µm and 400 µm.

5. The accumulator according to the preceding claims, wherein the pillars are spaced apart by a distance comprised between 0.1 µm and 20 µm.

6. The accumulator according to the preceding claim, wherein the pillars are spaced apart by a distance comprised between 2 µm and 10 µm.

7. The accumulator according to claim 1, wherein the pillars have a height comprised between 10 µm and 100 µm.

8. The accumulator according to claim 1, wherein the pillars have a width comprised between 2 µm and 10 µm.

9. A method for manufacturing an accumulator according to any of the preceding claims, comprising the following steps of:
a. Preparing first and second substrates;
b. Depositing at least one first stretchable current collector (2a, 2b, ...) on at least one portion of a face of the first substrate, in the vicinity and along at least one first portion of a curved line whose length is greater than the distance between the two ends thereof,
c. Depositing at least one second stretchable current collector (2a', 2b', ...) on at least one portion of a face of the second substrate, in the vicinity and on each side of at least one second curved line whose length is greater than the distance between the two ends thereof,
d. Depositing an anode consisting of a first set of pillars (4), on the at least one first current collector (2a, 2b, ...), the pillars of the first set being spaced from each other on a surface of the first collector, the pillars of the first set of pillars (4) having a height comprised between 1 µm and 1000 µm, and a width comprised between 1 µm and 100 µm,
e. Depositing a cathode consisting of a second set of pillars (4'), on the at least one second current collector (2a', 2b', ...), the pillars of the second set being spaced from each other on a surface of the second collector, the pillars of the second set of pillars (4') having a height comprised between 1 µm and 1000 µm, and a width comprised between 1 µm and 100 µm,
f. Depositing an electrolyte on the faces of the first and second substrates on which the at least one first and at least one second current collectors are deposited, respectively, by immersing the pillars of the anode (4) and the cathode (4') in the electrolyte, then placing these faces facing each other
or
placing the faces of the first and second substrates facing each other on which the at least one first and at least one second current collectors are deposited, respectively, then depositing an electrolyte in the volume (5) which is delimited by these faces by immersing the pillars of the anode (4) and the cathode (4') in the electrolyte.
